# EUROPEAN PATENT SPECIFICATION

(11) **EP 1 985 971 B1**
(45) Date of publication and mention of the grant of the patent: **15.08.2012**
(21) Application number: 08008045.0
(22) Date of filing: 25.04.2008
(51) Int. Cl.: G01C 21/28, G08G 1/123, G01C 21/26, G01S 5/14, G08G 1/127

(54) **Vehicle position information provision device, vehicle position information provision method, and computer program**
Vorrichtung zur Bereitstellung von Fahrzeugpositionsdaten, Verfahren zur Bereitstellung von Fahrzeugpositionsdaten und Computerprogramm
Dispositif pour fournir des informations sur la position d'un véhicule, son procédé, et programme informatique

(30) Priority: 26.04.2007 JP 2007117021
(43) Date of publication of application: 29.10.2008
(73) Proprietor: Aisin AW Co., Ltd., Fujii-cho Anjo-shi, Aichi 444-1192 (JP)
(72) Inventor: Ishikawa, Hiroki, Okazaki-shi Aichi 444-8564 (JP); Yamamoto, Yukio, Okazaki-shi Aichi 444-8564 (JP); Kano, Toshihiro, Okazaki-shi Aichi 444-8564 (JP)
(74) Representative: Kramer - Barske - Schmidtchen

(56) References cited:
- WO-A2-2005/010549
- US-A1- 2007 038 360
- US-B1- 6 452 544

## Description

### 1. Field of the Invention

The present invention relates to a vehicle position information provision device which provides information on a current position of a vehicle to an information center, a vehicle position information provision method, and a computer program.

### 2. Description of the Related Art

On-vehicle navigation devices, personal digital assistants (PDAs), mobile information instruments such as a mobile phone, personal computers, and the like have been capable of displaying a map of a desired area to a user by storing information on roads such as a general road and an expressway, facility names, and the like as map information in various storage devices or downloading the map information from a server and the like.

Further, in related-art navigation devices and the like, not only is the map displayed but also traffic information such as traffic jam information of a displayed road is provided in order to improve the user's convenience. As a new system of acquiring the traffic information, a probe car system, in which a running vehicle acts as a sensor (probe) to gather information (hereinafter, referred to as "probe information"), such as a current position (travel path), speed, and the like of the vehicle measured by the vehicle, in an information center (probe center) and produce the traffic information, is currently under research. For example, Japanese Patent Application Publication No. JP-A-2004-234649 (page 5, FIG. 2) discloses a system which accumulates the probe information gathered from a probe car, generates the traffic information by performing a statistical process on the accumulated information, and provides the traffic information to a terminal such as a navigation device and a PC.

Generally, when transmitting information relating to the current position of a vehicle and the like to an information center from the vehicle, the transmission is performed via a communication terminal such as a mobile phone and a PHS provided in the vehicle. Therefore, there has been a problem in that the number of times of communication and the amount of communication data become extremely large, thereby resulting in high communication fees, if the information relating to the current position and the like of the vehicle is constantly transmitted to the information center while the vehicle is running. On the other hand, the reliability of the traffic information generated in the information center decreases, if only limited data is transmitted in limited timings.

In the related art, a vehicle position has been specified using a mobile phone installed in a vehicle. Specifically, the current position of the mobile phone (i.e., of the vehicle) in a mobile phone communication network can be identified by a known enhanced observed time difference (E-OTD) method, a time difference of arrival (TDOA) method, a cell-ID method, and the like. The information center acquires the information via the mobile phone communication network, whereby the position of the vehicle can be specified on the information center side without performing a communication with the vehicle. However, the accuracy of the specification of the vehicle position based on the mobile phone communication network is low, whereby the reliability of the traffic information decreases when the traffic information is generated based only on the information thereof.

The present invention has been made to solve the problem of the related art, and has an object of providing a vehicle position information provision device, a vehicle position information provision method, and a computer program which can reduce the number of times of communication and the amount of communication data in communication with an information center and reduce the load of communication processing and the communication fees while maintaining the accuracy of the position information of the vehicle supplied to the information center from the vehicle.

With a vehicle position information provision device of a first aspect of the present invention, the number of times of communication and the amount of communication data for communication with an information center can be reduced while maintaining the accuracy of the position information of a vehicle supplied from the vehicle to the information center. Accordingly, a reduction of the communication processing load and the communication fees can be achieved.

With a vehicle position information provision device of a second aspect of the present invention, in the case where the accuracy of the position information of a vehicle via a mobile phone communication network is within a certain acceptance range, utilizing the position information allows the number of times of communication and the amount of communication data to be reduced in communication from the vehicle to an information center.

With a vehicle position information provision device of a third aspect of the present invention, the current position of a vehicle can easily be provided to the vehicle and an information center while keeping the communication fees low, since the vehicle and the information center can acquire the information relating to the current position of the vehicle by utilizing a mobile phone communication network. The current position of the vehicle can be acquired without performing data communication by a mobile phone particularly on the vehicle side.

With a vehicle position information provision method of a fourth aspect of the present invention, the number of times of communication and the amount of communication data for communication with an information center can be reduced while maintaining the accuracy of the position information of a vehicle supplied from the vehicle to the information center. Accordingly, the reduction of the communication processing load and communication fees can be achieved.

Further, with a computer program of a fifth aspect of the present invention of the present invention, a computer can execute functions such that the number of times of communication and the amount of communication data for communication with an information center is reduced while maintaining the accuracy of the position information of a vehicle supplied from the vehicle to the information center. Accordingly, the reduction of the communication processing load and the communication fees can be achieved.
FIG. 1 is a schematic configuration diagram showing a traffic information generation system according to an embodiment of the present invention;
FIG. 2 is a block diagram particularly showing the configuration of a probe center in a traffic information generation system according to the present embodiment;
FIG. 3 is a block diagram particularly showing the configuration of a navigation device in the traffic information generation system according to the present embodiment;
FIG. 4 is a flowchart of a vehicle position information provision program according to the present embodiment; and
FIG. 5 is an illustrative diagram illustrating a correction process of position information in step 13.

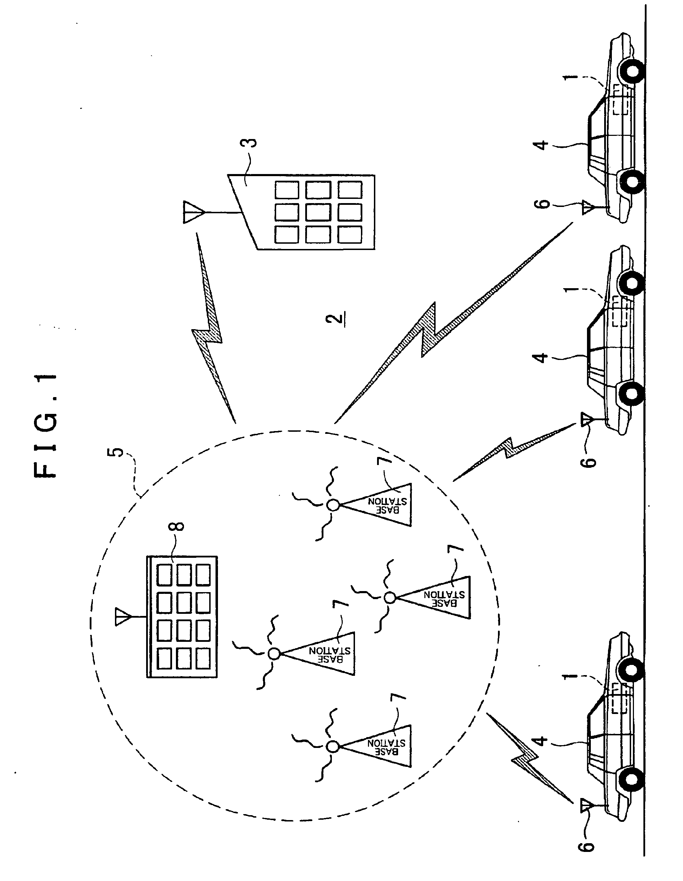

A vehicle position information provision device according to the present invention is described below in detail based on one embodiment as a navigation device with reference to the drawings.
First, the schematic configuration of a traffic information generation system 2 including a navigation device 1 according to this embodiment is described using FIG. 1. FIG. 1 is a schematic configuration diagram showing the traffic information generation system 2 according to this embodiment.

As shown in FIG. 1, the traffic information generation system 2 according to this embodiment is formed basically of a probe center (information center) 3 which gathers probe information and performs generation/delivery of traffic information based on the gathered probe information, a vehicle 4 as a probe car, and a mobile phone communication network 5 which links mobile phones to enable interactive communication.

The probe center 3 is a traffic information delivery center which gathers and accumulates the probe information including information relating to the current position of the vehicle 4 transmitted from each vehicle 4 running in various areas of the nation, generates the traffic information such as traffic jam information from the accumulated probe information, and delivers the generated traffic information (hereinafter referred to as "probe traffic information") to the vehicle 4. In the traffic information generation system 2 according to this embodiment, information relating to the current position of the vehicle 4 specified by the mobile phone communication network 5 is also gathered via the mobile phone communication network 5. The probe center 3 calculates, for example, an average vehicle speed of the vehicle at each link based on the information relating to the current position of the vehicle 4 gathered from the vehicle 4 or via the mobile phone communication network 5, and generates the traffic information by performing an arithmetic operation to obtain the degree of traffic jam at the link based on the average vehicle speed.

The vehicle 4 is a vehicle running on each road in the nation, and, as a probe car, forms a probe car system together with the probe center 3. The probe car system is a system which gathers information with the vehicle acting as a sensor. Specifically, the probe car system is a system in which the vehicle transmits an operational situation of each system such as speed data, steering operation, shift position, and the like together with position information of the vehicle detected by a global positioning system (GPS) to the probe center 3 via a mobile phone 6 as a communication module installed in the vehicle in advance, and in which the gathered data is reused as various information on the center side.
The probe information acquired by the vehicle 4 and transmitted to the probe center 3 in the traffic information generation system 2 according to this embodiment particularly includes the information relating to the current position of the running vehicle 4.

Further, the vehicle 4 is provided with the navigation device 1. The navigation device 1 is an on-vehicle equipment which displays a map around the position of the vehicle based on stored map data and performs search and guidance of a route to a set destination. The navigation device 1 also performs guidance of the probe traffic information received from the probe center 3 to the user. Further, as described below, the navigation device 1 compares the current position of the vehicle detected by the GPS and the current position of the vehicle acquired via the mobile phone communication network 5 through the mobile phone 6, and performs a process of determining whether or not to transmit the probe information relating to the current state of the vehicle (specifically, information relating to the current position of the vehicle) and transmitting the probe information to the probe center based on the determination result. Note that a detailed configuration of the navigation device 1 is described below.

The mobile phone communication network 5 includes a number of base stations 7 located in various areas of the nation and a mobile phone company 8 which manages and controls each base station 7, and is formed of a wired (optical fiber, ISDN, and the like) or wireless connection of the base stations 7 and the mobile phone company 8 with each other.
The base station 7 has a transceiver (transmitter/receiver) which communicates with the mobile phone 6 in motion, and an antenna. The base station 7 performs a wireless communication with the mobile phone company 8, while also acting as a terminal of the mobile phone communication network 5 which serves to relay a call and communication between the mobile phones 6 within a range (cell) in which radio signals from the base station 7 can be reached, to the mobile phone communication network 5.
The mobile phone communication network 5 identifies the current position of the mobile phone 6 (i.e., of the vehicle 4) by a known enhanced observed time difference (E-OTD) method, a time difference of arrival (TDOA) method, a cell-ID method, and the like. For example, in the cell-ID method, a signal is received from the mobile phone 6, whereby a cell (a sector in the case where the cell is divided in units of sectors) in which the mobile phone 6 exists is specified to measure the position of the vehicle 4. In this case, if the mobile phone communication network 5 limits the target to on-vehicle dedicated communication instruments, the position of the mobile phone 6 can be recognized as the position of the vehicle 4. Note that the mobile phone communication network 5 can constantly identify the position of the mobile phone 6 (i.e., of the vehicle 4) without the expense of communication fees.
The mobile phone company 8 is also a communication management center which performs communication with the base station 7 in each area and transmits the information relating to the current position of the vehicle 4 identified by the mobile phone communication network 5 to the probe center 3. Note that a data communication module (DCM) may be used as the mobile phone 6.

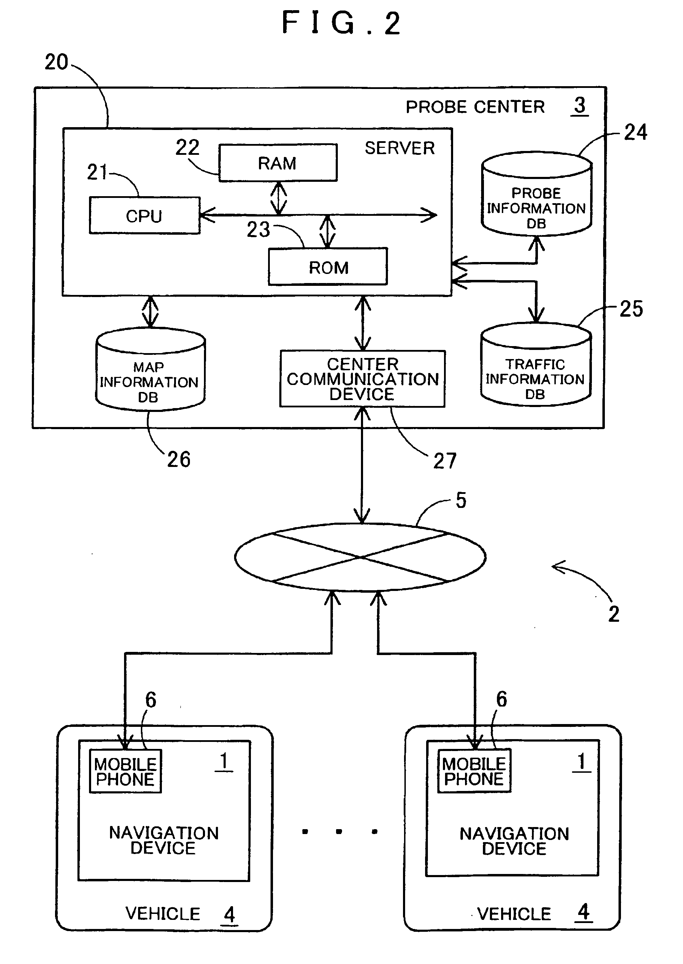

Next, the configuration of the probe center 3 forming the traffic information generation system 2 is described in more detail using FIG. 2. FIG. 2 is a block diagram showing the configuration of the traffic information generation system 2 according to this embodiment.

The probe center 3 includes a server 20, and a probe information DB 24, a traffic information DB 25, and a map information DB 26 which serve as an information storage units connected to the server 20, and a center communication device 27 connected to the same, as shown in FIG. 2.

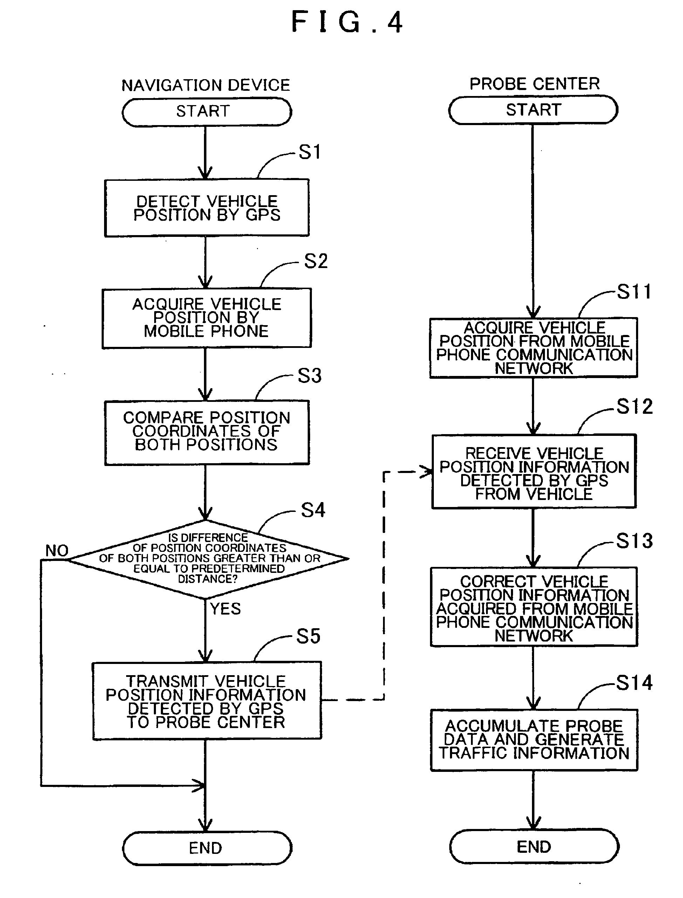

The server 20 is a control section which performs various controls in the probe center 3, such as a correction process of correcting the position information of the vehicle 4 acquired via the mobile phone communication network 5 based on the position information of the vehicle 4 acquired from the vehicle 4, a traffic jam degree arithmetic process of performing an arithmetic operation to obtain the degree of traffic jam at individual links by a statistical process of the probe information gathered from the vehicle 4 or via the mobile phone communication network 5, and a traffic information delivery process of producing various traffic information including the degree of traffic jam at the links and delivering the various traffic information to the vehicle 4. The server 20 includes a CPU 21 as an arithmetic device and a control device, and internal storage devices such as a RAM 22 used as a working memory when the CPU 21 performs various arithmetic processes, a ROM 23 which stores various control programs, a vehicle position information provision program described below (see FIG. 4), and the like.

The probe information DB 24 is a storage unit which cumulatively stores the probe information gathered from vehicles 4 running across the nation and the information relating to the current position of each of the vehicles 4 gathered via the mobile phone communication network 5. Note that, in this embodiment, the probe information gathered from the vehicle 4 particularly includes position coordinates (a travel path) showing a traveling position of the vehicle 4.

The traffic information DB 25 is a storage unit which stores probe statistical traffic information generated by the server 20 by performing a map matching process or a statistical process on the probe information stored in the probe information DB 24. The probe statistical traffic information includes information such as a proceeding direction of the link, a link travel time, the average vehicle speed, the degree of traffic jam at the link, and the like.

The map information DB 26 is a storage unit which stores, for example, link data relating to roads (links), node data relating to node points, map display data for displaying a map, intersection data relating to intersections, search data for searching a route, facility data relating to facilities, and retrieval data for retrieving a location. The server 20 performs the map matching process of specifying the position of the vehicle 4 on a map based on the current position information of the vehicle acquired from the vehicle 4 or via the mobile phone communication network 5 and map information stored in the map information DB 26.

The center communication device 27 is a communication device for performing communication with the vehicle 4 via the mobile phone communication network 5. The probe center 3 in this embodiment acquires information relating to the current position of the vehicle 4 specified in the mobile phone communication network 5 by the center communication device 27.

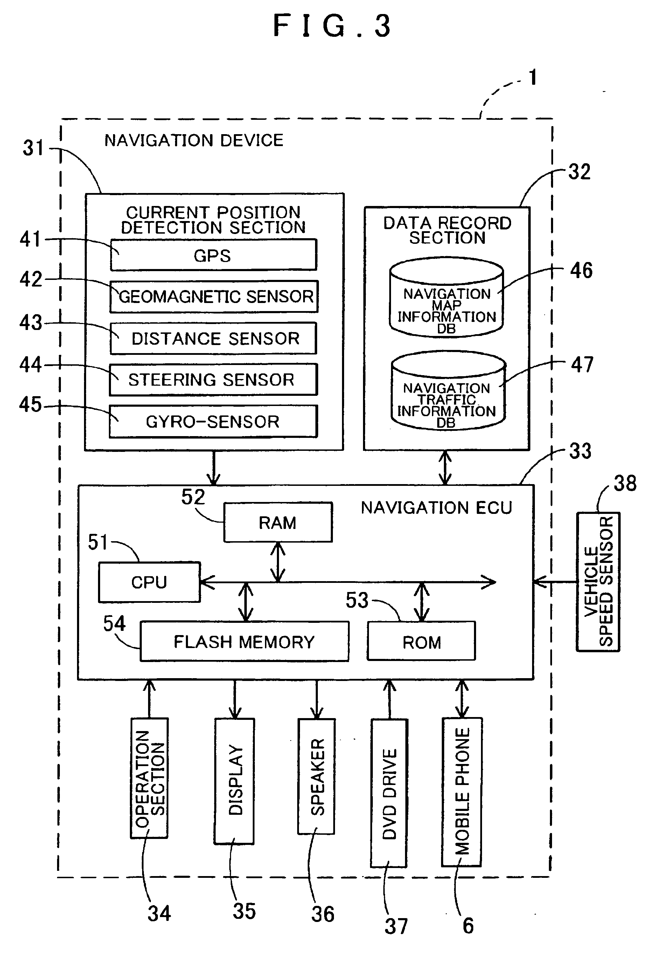

Next, the schematic configuration of the navigation device 1 installed in the vehicle 4 is described using FIG. 3. FIG. 3 is a block diagram showing the navigation device 1 according to this embodiment.
As shown in FIG. 3, the navigation device 1 according to this embodiment is formed of a current position detection section 31 which detects the current position of the vehicle, a data record section 32 which stores various data, a navigation ECU (current position acquisition unit, mobile phone network information acquisition unit, position comparison unit, and information transmission unit) 33 which performs various arithmetic processes based on input information, an operation section 34 which accepts an operation from an operator, a display 35 which displays information such as a map to the operator, a speaker 36 which outputs voice guidance relating to route guidance, a DVD drive 37 which reads a DVD serving as a storage medium storing a program, and the mobile phone 6 which performs communication with the probe center 3. The navigation ECU 33 is connected with a vehicle speed sensor 38 which detects the traveling speed of the vehicle.

Description on each component forming the navigation device 1 is given below. The current position detection section 31 is formed of a GPS (GPS receiver) 41, a geomagnetic sensor 42, a distance sensor 43, a steering sensor 44, a gyro-sensor 45 as a direction detection section, an altimeter (not shown), for example, and is capable of detecting the current position of the vehicle, a direction, a distance to an object (for example, an intersection), and the like. The GPS 41 is a receiver which receives GPS signals from a GPS satellite, and the navigation ECU 33 acquires a GPS measurement point which specifies the current position of the vehicle based on the GPS signals received by the GPS 41.

The data record section 32 includes a hard disk (not shown) as an external storage device and a storage medium, and a recording head (not shown) as a driver for reading a navigation map information DB 46, a navigation traffic information DB 47, a predetermined program, and the like recorded in a hard disk, and for writing predetermined data on the hard disk.

The navigation map information DB 46 basically has the same configuration as that of the map information DB 26 of the probe center 3, and is a storage which stores, for example, link data relating to roads (links), node data relating to node points, map display data for displaying a map, intersection data relating to intersections, search data for searching a route, facility data relating to facilities, and retrieval data for retrieving a location.

The navigation traffic information DB 47 is a storage unit which stores the probe statistical traffic information delivered from the probe center 3 and VICS information delivered from a VICS center. The navigation ECU 33 performs route search and traffic information guidance using the traffic information stored in the navigation traffic information DB 47.

The navigation electronic control unit (ECU) 33 is an electronic control unit which performs an overall control of the navigation device 1 such as a guidance route setting process of setting a guidance route to the destination from the current position in the case where the destination is selected, a comparison process of comparing the current position of the vehicle acquired by the current position detection section 31 and the current position of the vehicle acquired via the mobile phone communication network 5 through the mobile phone 6, and an information transmission process of transmitting, as the probe information, the current position of the vehicle acquired by the GPS 41 to the probe center 3 in the case where the positions do not coincide. The navigation ECU 33 includes a CPU 51 as an arithmetic device and a control device, internal storage devices such as a RAM 52 which is used as a working memory when the CPU 51 performs various arithmetic processes and stores route data and the like of the searched route, a ROM 53 in which a control program, the vehicle position information provision program described below (see FIG. 4) and the like are recorded, and a flash memory 54 in which a program read from the ROM 53 is recorded, and.

Next, the vehicle position information provision program, which is executed in the navigation device 1 and the probe center 3 forming the traffic information generation system 2 having the configuration described above, is described based on FIG. 4. FIG. 4 is a flowchart of the vehicle position information provision program according to this embodiment. The vehicle position information provision program is a program which is executed at predetermined intervals (for example, 200 ms) and transmits the information relating to the current position of the vehicle 4 from the vehicle 4 to the probe center 3 under a predetermined condition. Note that the program shown in the flowchart of FIG. 4 described below is stored in the RAM, ROM, or the like included in the navigation ECU 33 or the server 20, and is executed by the CPU 51 or the CPU 21.

First, the vehicle position information provision program executed by the navigation device 1 is described. In step (hereinafter abbreviated as "S") 1, the GPS 41 receives GPS signals from the GPS satellite, whereby the CPU 51 detects the current position of the vehicle. The current time is also detected. Note that the acquired current position of the vehicle in this case is a GPS measurement point (latitude and longitude). The S1 corresponds to a process of the current position acquisition unit.

Next, the CPU 51 acquires the current position of the vehicle specified by the mobile phone communication network 5 via the mobile phone 6 in S2. Note that, as a specification method of the current position of the vehicle via the mobile phone communication network 5, there are the E-OTD method, the TDOA method, the cell-ID method, and the like. The S2 corresponds to a process of the mobile phone network information acquisition unit.

Then, in S3, the CPU 51 compares the position coordinates of the current position of the vehicle detected by the GPS 41 in the S 1 and the current position of the vehicle acquired via the mobile phone communication network 5 in the S2. Note that, since the position of the vehicle 4 specified in the mobile phone communication network 5 is less accurate compared to the position of the vehicle 4 specified by the GPS 41, it is rare that the position coordinates of both positions coincide completely, whereby a difference occurs between the position coordinates of both positions. The S3 corresponds to a process of the position comparison unit.

In S4, based on the comparison result in the S3, the CPU 51 determines whether or not the current position of the vehicle detected by the GPS 41 and the current position of the vehicle acquired via the mobile phone communication network 5 do not coincide and the difference of the coordinates is greater than or equal to a predetermined distance. As a result, in the case where it is determined that the difference of the coordinates is greater than or equal to the predetermined distance (S4: YES), the program proceeds to S5. In S5, the information relating to the current position of the vehicle detected by the GPS 41 in the S 1 and the time at which the current position has been detected are transmitted as the probe information to the probe center 3 via the mobile phone 6. Note that the information relating to the current position of the vehicle transmitted to the probe center 3 may be a link number of a link in which the vehicle is located, specified by performing a map matching, or position coordinates corrected by the map matching process, other than the position coordinates (x, y) specifying the current position of the vehicle. Further, the speed of the vehicle or the proceeding direction, for example, may also be transmitted together. Note that the S5 corresponds to a process of the information transmission unit.

On the other hand, in the case where it is determined that the coordinates coincide or the difference of the coordinates is less than the predetermined distance (S4: NO), the vehicle position information provision program is terminated without transmitting the information relating to the current position of the vehicle detected by the GPS 41 in the S 1 to the probe center 3.

Next, the vehicle position information provision program executed by the probe center 3 is described. First, in S 11, the CPU 21 acquires the position information, specified in the mobile phone communication network 5, of vehicles 4 running across the nation from the mobile phone company 8 via the center communication device 27. The time corresponding to the position of each of the vehicles 4 (i.e., the time at which the vehicle has passed the position) is also acquired. Note that the position information of the vehicle 4 to be acquired may be position information in real time or position information of a predetermined period in the past.

Next, in S12, the CPU 21 receives the information relating to the current position of the vehicle 4 based on the GPS 41 and transmitted from the vehicle 4 in the S5.

Then, in S 13, the CPU 21 corrects the position information of the vehicle 4 acquired via the mobile phone communication network 5 in the S 11, based on the position information of the vehicle 4 based on the GPS 41 and received from the vehicle 4 in the S12.

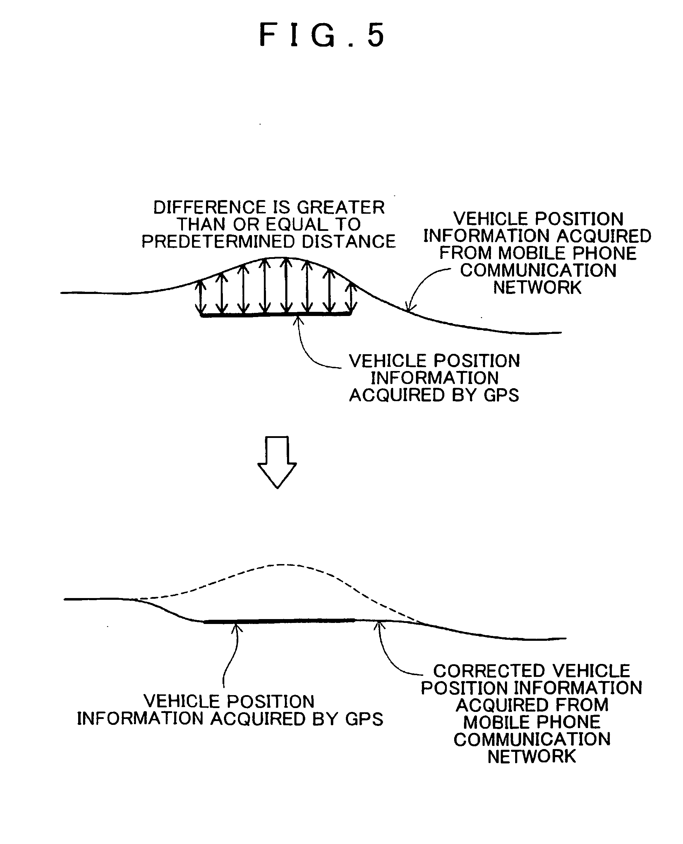

The correction process of the position information in the S 13 is specifically described below using FIG. 5. As shown in FIG. 5, the probe center 3 has two kinds of position information, the position information of the vehicle 4 acquired via the mobile phone communication network 5 and the position information of the vehicle 4 based on the GPS 41 and received from the vehicle 4. As described above, since the position of the vehicle 4 specified in the mobile phone communication network 5 is less accurate compared to the position of the vehicle 4 specified by the GPS 41, a difference occurs between the position coordinates of both positions. The position information of the vehicle 4 based on the GPS 41 is transmitted from the vehicle 4 in the case where the navigation device 1 particularly determines the difference to be greater than or equal to the predetermined distance. Therefore, the position information of the vehicle 4 based on the GPS 41 is acquired on the probe center 3 side only for a partial section of the whole travel path of the vehicle 4.

Since the position of the vehicle 4 specified by the GPS 41 is more accurate than the position of the vehicle 4 specified in the mobile phone communication network 5, more accurate position information of the vehicle can be obtained by correcting the position information of the vehicle 4 acquired via the mobile phone communication network 5 based on the position information of the vehicle 4 based on the GPS 41, which is available only for limited regions. Therefore, in the process of the S 13, the position information of the vehicle 4 acquired via the mobile phone communication network 5 is corrected such that the travel path of the vehicle 4 based on the GPS 41 becomes continuous with the travel path of the vehicle based on the mobile phone communication network 5, as shown in FIG. 5.

Next, in S 14, the CPU 21 stores the position information of the vehicle 4 based on the GPS 41 and transmitted from the vehicle 4 and the position information of the vehicle 4 acquired via the mobile phone communication network 5 and corrected in the S13 in the probe information DB 24 as the probe information. The CPU 21 then performs the map matching process with respect to the stored probe information at the predetermined intervals (for example, 5 minutes, 24 hours, and 1 year), and generates the traffic information such as the degree of traffic jam by performing the statistical process using the result of the matching. Note that the generated traffic information is delivered to the vehicle 4, whereby the navigation device 1 installed in the vehicle 4 can perform guidance of the delivered traffic information and set a guidance route depending on the degree of traffic jam.

As described above in detail, in the navigation device 1, the vehicle position information provision method by the navigation device 1, and the computer program executed by the navigation device 1, the current position of the vehicle 4 is detected by the current position detection section 31 installed in the vehicle 4 (S 1), and the current position of the vehicle 4 is similarly acquired via the mobile phone communication network 5 through the mobile phone 6 (S2). In the case where the position coordinates of both positions are compared (S3), and the position coordinates of both positions do not coincide and the difference of both position coordinates is greater than or equal to the predetermined distance (S4), the information relating to the current position of the vehicle 4 specified by the GPS 41 is transmitted to the probe center 3 (S5). Therefore, in the case where the position information of the vehicle via the mobile phone communication network has an accuracy within a certain acceptance range, utilizing the position information on the probe center 3 side allows the number of times of communication and the amount of communication data for the communication with the probe center 3 to be reduced, while maintaining the accuracy of the position information of the vehicle 4 supplied to the probe center 3 from the vehicle 4. Accordingly, the reduction of communication processing load and communication fees can be achieved.
Since the vehicle 4 and the probe center 3 can acquire the information relating to the current position of the vehicle 4 by utilizing the mobile phone communication network 5, the current position of the vehicle 4 can easily be provided to the vehicle 4 and the probe center 3 while keeping the communication fees low. The current position of the vehicle can also be acquired without performing data communication through the mobile phone 6 particularly on the vehicle 4 side.

Note that the present invention is not limited to the embodiment described above, and various modifications and variations may obviously be made without departing from the gist of the present invention.
For example, although the information relating to the current position of the vehicle acquired by the GPS 41 is transmitted to the probe center 3 in the case where the difference of the position coordinates of the current position of the vehicle acquired by the GPS 41 in the navigation device 1 and the current position of the vehicle acquired via the mobile phone communication network 5 is greater than or equal to the predetermined distance (S4: YES) in this embodiment, the information may be transmitted in the case where the position coordinates of the current position of the vehicle acquired by the GPS 41 and the current position of the vehicle acquired via the mobile phone communication network 5 do not coincide. The predetermined distance may be formed to be changeable by the navigation device 1 and the probe center 3.

Although the position coordinates of the current position of the vehicle acquired by the GPS 41 in the navigation device 1 and the current position of the vehicle acquired via the mobile phone communication network 5 are compared (S3) in this embodiment, the position coordinates of a predetermined period in the past instead of those in real time may be compared.

## Claims

1. A vehicle position information provision device comprising:
a current position acquisition unit (31) which acquires a current position of a vehicle (4) based on a radio signal from a satellite;
a communication device (6) utilizing a mobile phone communication network (5);
a mobile phone network information acquisition unit (33) which acquires a current position of the vehicle (4) by the communication device (6);
a position comparison unit (33) which compares the current position of the vehicle acquired by the current position acquisition unit (31) and the current position of the vehicle (4) acquired by the mobile phone network information acquisition unit (33); and
an information transmission unit (33) which transmits information relating to the current position of the vehicle (4) acquired by the current position acquisition unit (31) to an information center (3), in a case where it is determined that the current position of the vehicle (4) acquired by the current position acquisition unit (31) and the current position of the vehicle (4) acquired by the mobile phone network information acquisition unit (33) do not coincide based on a comparison result of the position comparison unit (33).

2. The vehicle position information provision device according to claim 1, wherein the information transmission unit (33) transmits the information relating to the current position of the vehicle (4) acquired by the current position acquisition unit (31) to the information center (3), in a case where it is determined that a difference of the current position of the vehicle (4) acquired by the current position acquisition unit (31) and the current position of the vehicle (4) acquired by the mobile phone network information acquisition unit (33) is greater than or equal to a predetermined distance based on the comparison result of the position comparison unit (33).

3. The vehicle position information provision device according to claim 1 or 2, wherein the mobile phone network information acquisition unit (33) acquires the information relating to the current position of the vehicle (4) via a mobile phone communication network, including a base station (7) which performs communication with the communication device (6), through the communication device (6).

4. A vehicle position information provision method comprising:
acquiring (S1) a current position of a vehicle (4) based on a radio signal from a satellite;
acquiring (S2) a current position of the vehicle (4) with a communication device (6) utilizing a mobile phone communication network (5);
comparing (S3) the current position of the vehicle (4) acquired based on the radio signal from the satellite and the current position of the vehicle (4) acquired by the communication device (6); and
transmitting (S5) information relating to the current position of the vehicle (4) acquired based on the radio signal from the satellite to an information center (3), in a case where it is determined that the current position of the vehicle acquired based on the radio signal from the satellite and the current position of the vehicle acquired by the communication device (6) do not coincide based on a comparison result in comparing the current positions.

5. A computer program installed in a computer, the computer program causing the computer to execute:
a current position acquisition function of acquiring a current position of a vehicle (4) based on a radio signal from a satellite;
a mobile phone network information acquisition function of acquiring a current position of the vehicle (4) by a communication device (6) utilizing a mobile phone communication network (5);
a position comparison function of comparing the current position of the vehicle (4) acquired by the current position acquisition function and the current position of the vehicle (4) acquired by the mobile phone network information acquisition function; and
an information transmission function of transmitting information relating to the current position of the vehicle (4) acquired by the current position acquisition function to an information center (3), in a case where it is determined that the current position of the vehicle (4) acquired by the current position acquisition function and the current position of the vehicle (4) acquired by the mobile phone network information acquisition function do not coincide based on a comparison result of the position comparison function.

## Patentansprüche

1. Fahrzeugpositionsinformationsbereitstellungsvorrichtung mit:
einer Erfassungseinheit (31) für eine gegenwärtige Position, die eine gegenwärtige Position eines Fahrzeugs (4) basierend auf einem Funksignal von einem Satelliten erfasst;
einer Kommunikationsvorrichtung (6), die ein Mobiltelefonkommunikationsnetzwerk (5) verwendet;
einer Mobiltelefonnetzwerkinformationserfassungseinheit (33), die eine gegenwärtige Position des Fahrzeugs (4) durch die Kommunikationsvorrichtung (6) erfasst;
einer Positionsvergleichseinheit (33), die die gegenwärtige Position des Fahrzeugs, die durch die Erfassungseinheit (31) für die gegenwärtige Position erfasst wird, mit der gegenwärtigen Position des Fahrzeugs (4), die durch die Mobiltelefonnetzwerkinformationserfassungseinheit (33) erfasst wird, vergleicht; und
einer Informationsübertragungseinheit (33), die Information bezüglich der gegenwärtigen Position des Fahrzeugs (4), die von der Erfassungseinheit (31) für die gegenwärtige Position erfasst wird, an ein Informationszentrum (3) überträgt, in einem Fall, bei dem bestimmt wird, dass die gegenwärtige Position des Fahrzeugs (4), die durch die Erfassungseinheit (31) für die gegenwärtige Position erfasst worden ist, und die gegenwärtige Position des Fahrzeugs (4), die durch die Mobiltelefonnetzwerkinformationserfassungseinheit (33) erfasst worden ist, nicht zusammenfallen, basierend auf einem Vergleichsergebnis der Positionsvergleichseinheit (33).

2. Fahrzeugpositionsinformationsbereitstellungsvorrichtung nach Anspruch 1, bei der die Informationsübertragungseinheit (33) die Information bezüglich der gegenwärtigen Position des Fahrzeugs (4), die durch die Erfassungseinheit (31) für die gegenwärtige Position erfasst wird, an das Informationszentrum (3) überträgt, in einem Fall, bei dem bestimmt wird, dass eine Differenz zwischen der gegenwärtigen Position des Fahrzeugs (4), die durch die Erfassungseinheit (31) für die gegenwärtige Position erfasst worden ist, und der gegenwärtigen Position des Fahrzeugs (4), die durch die Mobiltelefonnetzwerkinformationserfassungseinheit (33) erfasst worden ist, größer als oder gleich ein vorbestimmter Abstand ist, basierend auf dem Vergleichsergebnis der Positionsvergleichseinheit (33).

3. Fahrzeugpositionsinformationsbereitstellungsvorrichtung nach Anspruch 1 oder 2, bei der die Mobiltelefonnetzwerkinformationserfassungseinheit (33) die Information bezüglich der gegenwärtigen Position des Fahrzeugs (4) durch die Kommunikationsvorrichtung (6) über ein Mobiltelefonkommunikationsnetzwerk erfasst, enthaltend eine Basisstation (7), die die Kommunikation mit der Kommunikationsvorrichtung (6) durchführt.

4. Fahrzeugpositionsinformationsbereitstellungsverfahren mit:
Erfassen (S1) einer gegenwärtigen Position eines Fahrzeugs (4) basierend auf einem Funksignal von einem Satelliten;
Erfassen (S2) einer gegenwärtigen Position des Fahrzeugs (4) durch eine Kommunikationsvorrichtung (6), die ein Mobiltelefonkommunikationsnetzwerk (5) verwendet;
Vergleichen (S3) der gegenwärtigen Position des Fahrzeugs (4), die erfasst wird basierend auf dem Funksignal von dem Satelliten, mit der gegenwärtigen Position des Fahrzeugs (4), die durch die Kommunikationsvorrichtung (6) erfasst wird; und
Übertragen (S5) von Information bezüglich der gegenwärtigen Position des Fahrzeugs (4), die basierend auf dem Funksignal von dem Satelliten erfasst worden ist, an ein Informationszentrum (3), in einem Fall, bei dem bestimmt wird, dass die gegenwärtige Position des Fahrzeugs, die basierend auf dem Funksignal von dem Satelliten erfasst worden ist, und die gegenwärtige Position des Fahrzeugs, die durch die Kommunikationsvorrichtung (6) erfasst worden ist, nicht übereinstimmen, basierend auf einem Vergleichsergebnis beim Vergleichen der gegenwärtigen Positionen.

5. Computerprogramm, das in einem Computer installiert ist, wobei das Computerprogramm den Computer veranlasst zum Ausführen von:
einer Erfassungsfunktion für eine gegenwärtige Position zum Erfassen einer gegenwärtigen Position eines Fahrzeugs (4) basierend auf einem Funksignal von einem Satelliten;
einer Mobiltelefonnetzwerkinformationserfassungsfunktion zum Erfassen einer gegenwärtigen Position des Fahrzeugs (4) durch eine Kommunikationsvorrichtung (6), die ein Mobiltelefonkommunikationsnetzwerk (5) verwendet;
einer Positionsvergleichsfunktion zum Vergleichen der gegenwärtigen Position des Fahrzeugs (4), die durch die Erfassungsfunktion für die gegenwärtige Position erfasst worden ist, mit der gegenwärtigen Position des Fahrzeugs (4), die durch die Mobiltelefonnetzwerkinformationserfassungsfunktion erfasst worden ist; und
einer Informationsübertragungsfunktion zum Übertragen von Information bezüglich der gegenwärtigen Position des Fahrzeugs (4), die durch die Erfassungsfunktion für die gegenwärtige Position erfasst worden ist, an ein Informationszentrum (3), in einem Fall, bei dem bestimmt wird, dass die gegenwärtige Position des Fahrzeugs (4), die durch die Erfassungsfunktion für die gegenwärtige Position erfasst worden ist, und die gegenwärtige Position des Fahrzeugs (4), die durch die Mobiltelefonnetzwerkinformationserfassungsfunktion erfasst worden ist, nicht übereinstimmen, basierend auf einem Vergleichsergebnis der Positionsvergleichsfunktion.

## Revendications

1. Dispositif de fourniture d'informations sur la position d'un véhicule, comprenant :
une unité d'acquisition de position courante (31) qui acquiert une position courante d'un véhicule (4) sur la base d'un signal radio émanant d'un satellite ;
un dispositif de communication (6) utilisant un réseau de communication (5) en téléphonie mobile ;
une unité d'acquisition d'informations (33) du réseau de téléphonie mobile qui acquiert une position courante du véhicule (4) par le dispositif de communication (6) ;
une unité de comparaison de positions (33) qui compare la position courante du véhicule acquise par l'unité d'acquisition de position courante (31) et la position courante du véhicule (4) acquise par l'unité d'acquisition d'informations (33) du réseau de téléphonie mobile ;
une unité de transmission d'informations (33) qui transmet des informations se rapportant à la position courante du véhicule (4) acquise par l'unité d'acquisition de position courante (31) à un centre d'information (3), dans le cas où l'on détermine que la position courante du véhicule (4) acquise par l'unité d'acquisition de position courante (31) et la position courante du véhicule (4) acquise par l'unité d'acquisition d'informations (33) du réseau de téléphonie mobile ne coïncident pas sur la base d'un résultat de comparaison de l'unité de comparaison de positions (33).

2. Dispositif de fourniture d'informations sur la position d'un véhicule selon la revendication 1, dans lequel l'unité de transmission d'informations (33) transmet les informations se rapportant à la position courante du véhicule (4) acquise par l'unité d'acquisition de position courante (31) au centre d'information (3), dans le cas où l'on détermine qu'une différence de la position courante du véhicule (4) acquise par l'unité d'acquisition de position courante (31) et de la position courante du véhicule (4) acquise par l'unité d'acquisition d'informations (33) du réseau de téléphonie mobile est supérieure ou égale à une distance prédéterminée sur la base du résultat de comparaison de l'unité de comparaison de positions (33).

3. Dispositif de fourniture d'informations sur la position d'un véhicule selon la revendication 1 ou 2, dans lequel l'unité d'acquisition d'informations (33) du réseau de téléphonie mobile acquiert les informations se rapportant à la position courante du véhicule (4) via un réseau de communication de téléphonie mobile, comprenat une station de base (7) qui assure la communication avec le dispositif de communication (6) via le dispositif de communication (6).

4. Procédé de fourniture d'informations sur la position d'un véhicule, comprenant les étapes consistant à :
acquérir (S1) une position courante d'un véhicule (4) sur la base d'un signal radio émanant d'un satellite ;
acquérir (S2) une position courante du véhicule (4) avec un dispositif de communication (6) utilisant un réseau de communication de téléphonie mobile (5) ;
comparer (S3) la position courante du véhicule (4) acquise sur la base du signal radio émanant du satellite et la position courante du véhicule (4) acquise par le dispositif de communication (6) ; et
transmettre (S5) des informations se rapportant à la position courante du véhicule (4) acquise sur la base du signal radio émanant du satellite à un centre d'information (3), dans le cas ou l'on détermine que la position courante du véhicule acquise sur la base du signal radio émanant du satellite et la position courante du véhicule (4) acquise par le dispositif de communication (6) ne coïncident pas sur la base d'un résultat de comparaison en comparant les positions courantes.

5. Programme informatique installé dans un ordinateur, le programme informatique amenant l'ordinateur à exécuteur :
une fonction d'acquisition de position courante pour acquérir une position courante d'un véhicule (4) sur la base d'un signal radio émanant d'un satellite ;
une fonction d'acquisition d'informations d'un réseau de téléphonie mobile pour acquérir une position courante du véhicule (4) par un dispositif de communication (6) utilisant un réseau de communication (5) de téléphonie mobile ;
une fonction de comparaison de positions pour comparer la position courante du véhicule (4) acquise par la fonction d'acquisition de position courante et la position courante du véhicule (4) acquise par la fonction d'acquisition d'informations d'un réseau de téléphonie mobile ; et
une fonction de transmission d'informations pour transmettre des informations se rapportant à la position courante du véhicule (4) acquise par la fonction d'acquisition de position courante à un centre d'information (3), dans le cas où l'on détermine que la position courante du véhicule (4) acquise par la fonctions d'acquisition de position courante et la position courante du véhicule (4) acquise par la fonction d'acquisition d'informations d'un réseau de téléphonie mobile ne coïncident pas sur la base d'un résultat de comparaison de la fonction de comparaison de positions.
